# EUROPÄISCHE PATENTSCHRIFT

(11) **EP 0 462 448 B1**
(45) Veröffentlichungstag und Bekanntmachung des Hinweises auf die Patenterteilung: **05.04.1995**
(21) Anmeldenummer: 91109226.0
(22) Anmeldetag: 06.06.1991
(51) Int. Cl.: C08L 53/00, C08L 23/06

(54) **Polymermischungen aus Propylencopolymerisaten und Polyethylen**
Polymermixtures from propylene copolymers and polyethylene
Mélanges de polymères de copolymères de propylène et de polyethylène

(30) Priorität: 19.06.1990 DE 4019455
(43) Veröffentlichungstag der Anmeldung: 27.12.1991
(73) Patentinhaber: BASF Aktiengesellschaft, 67063 Ludwigshafen (DE)
(72) Erfinder: Schwager, Harald, Dr., W-6720 Speyer (DE); Ruempler, Klaus-Dieter, Dr., W-6706 Wachenheim (DE); Braun, Hans-Georg, Dr., W-6718 Gruenstadt (DE)

(56) Entgegenhaltungen:
- US-A- 4 588 775

## Beschreibung

Die vorliegende Erfindung betrifft Polymermischungen, enthaltend
a) 20 bis 59 Gew.-% eines Propylencopolymerisats, welches seinerseits aus 20 bis 65 Gew.-% eines Propylenhomopolymerisats und 35 bis 80 Gew.-% eines statistischen Propylencopolymerisats mit einpolymerisierten C₂-C₁₀-Alk-1-enen besteht, und
b) 41 bis 80 Gew.-% eines Polyethylens mit einer Dichte von 0,94 bis 0,98 g/cm³ und einem Schmelzflußindex von weniger als 15 g/10 min., bei 190°C und einem Gewicht von 2,16 kg.

Außerdem betrifft die Erfindung ein Verfahren zur Herstellung dieser Polymermischungen sowie Folien und Formkörper aus diesen Polymermischungen.

Die Eigenschaften von Polymeren können durch Zumischen von anderen Polymeren verändert werden, wobei Polymermischungen, sogenannte "Blends" entstehen. So lassen sich beispielsweise die Eigenschaften von harten, temperaturbeständigen Polymeren mit denen von weichen, elastischen Polymeren durch Vermischen derart kombinieren, daß die dabei erhältlichen "Blends" eine vorteilhafte Kombination der guten Eigenschaften beider Polymerer darstellen (Saechtling, Kunststoff-Taschenbuch, Carl Hanser-Verlag, München, Seite 8, [1986]). In diesem Zusammenhang sind insbesondere Ethylen-Propylen-Copolymerisate mit unterhalb der Verarbeitungstemperatur aufschmelzenden Polyethylen-Domänen in amorpher Polypropylen-Matrix von Interesse (Saechtling, Kunststofftaschenbuch, Carl Hanser-Verlag, München, Seite 235 [1986]). Durch Vermischung mehrerer Polyolefine ist es möglich, Produkte herzustellen, die zum Teil gegensätzliche Eigenschaften, wie beispielsweise eine hohe Schlagzähigkeit bei gleichzeitig hoher Steifigkeit, aufweisen.

Weiterhin sind Mischungen aus hochdichtem Polyethylen (HDPE) einerseits und Ethylen-Propylen-Dien-Copolymerisaten andererseits bekannt, die sich durch eine hohe mechanische Stabilität auszeichnen (Polymer Bulletin, 21, Seite 401-408 [1989]). Diese werden allerdings nach einem relativ aufwendigen Verfahren in Anwesenheit von Peroxiden hergestellt, was ihren Einsatzbereich einschränkt.

Eine Kombination unterschiedlicher mechanischer Eigenschaften, insbesondere einer hohen Schlagzähigkeit bei noch ausreichend hoher Steifigkeit, läßt sich auch bei bestimmten Propylen-Ethylen-Copolymerisaten beobachten. Diese sind durch Ziegler-Natta-Katalyse erhältlich (US-A 4 454 299, US-A 4 455 405, ZA-B 0084/3561, ZA-B 0084/3563, ZA-B 0084/5261, GB-B 1 032 945), wobei man zunächst gasförmiges Propylen in einer ersten Reaktionsstufe polymerisiert und das daraus resultierende Homopolymerisat anschließend in eine zweite Reaktionsstufe bringt, wo diesem ein Gemisch aus Ethylen und Propylen hinzupolymerisiert wird. Die Verfahren werden gewöhnlich bei erhöhtem Druck und in Anwesenheit von Wasserstoff als Molmassenregler durchgeführt. Die dabei erhältlichen Copolymerisate weisen zwar meist eine ausgezeichnete Schlagzähigkeit, zugleich aber neben einer verringerten Steifigkeit auch eine relativ hohe Neigung zum Weißbruch auf. Unter Weißbruch versteht man dabei die an vielen Kunststoffen während der Verstreckung auftretende Weißfärbung der vorher transparenten Probe in einzelnen Bereichen.

Ferner sind aus der US-A 4 588 775 Polymermischungen mit bis zu 40 Gew.-% eines Polyethylens hoher Dichte bekannt, die sich insbesondere durch eine hohe Schlagzähigkeit auszeichnen.

Der vorliegenden Erfindung lag daher die Aufgabe zugrunde, den geschilderten Nachteilen abzuhelfen und Polymerisate mit einer hohen Schlagzähigkeit, einer geringen Neigung zum Weißbruch und einer hohen Steifigkeit ohne erhöhten verfahrenstechnischen Aufwand herzustellen.

Demgemäß wurden die eingangs definierten neuen Polymermischungen aus einem Propylencopolymerisat und Polyethylen gefunden.

Die erfindungsgemäßen Polymermischungen enthalten 20 bis 59 Gew.-%, vorzugsweise 30 bis 59 Gew.-% eines Propylencopolymerisats, welches seinerseits aus 20 bis 65 Gew.-% Propylenhomopolymerisat und 35 bis 80 Gew.-% statistischem Propylencopolymerisat mit einpolymerisierten C₂-C₁₀-Alk-1-enen besteht. Bevorzugt wird dabei ein Propylencopolymerisat verwendet, welches neben 35 bis 65 Gew.-% Propylenhomopolymerisat noch 35 bis 65 Gew.-% statistisches Propylencopolymerisat aufweist. Das statistische Propylencopolymerisat enthält einpolymerisierte C₂-C₁₀-Alkene, beispielsweise Ethylen, But-1-en, Pent-1-en, Hex-1-en, Hept-1-en oder Oct-1-en oder Gemische dieser Comonomeren, wobei bevorzugt Ethylen oder But-1-en verwendet werden. Die Menge an Comonomeren im statistischen Propylencopolymerisat sollte dabei so bemessen werden, daß der Comonomerenanteil am Propylencopolymerisat 15 Gew.-%, vorzugsweise 20 Gew.-%, nicht unterschreitet.

Die Herstellung dieser Propylencopolymerisate erfolgt durch Polymerisation mit Hilfe von Ziegler-Natta-Katalysatoren, vorzugsweise in der Gasphase mit den in der Technik gebräuchlichen Polymerisationsreaktoren. Die dabei verwendeten Ziegler-Natta-Katalysatoren bestehen üblicherweise aus einer Feststoffkomponente, die neben Titan, Magnesium und einem Halogen noch einen Elektronendonor aufweist, einer Aluminiumkomponente und einer weiteren Elektronendonorkomponente.

Zur Herstellung der titanhaltigen Feststoffkomponente werden als Titanverbindungen im allgemeinen Halogenide oder Alkoholate des drei- oder vierwertigen Titans verwendet, wobei die Chloride des Titans, insbesondere Titantetrachlorid, bevorzugt sind. Vorteilhaft enthält die titanhaltige Feststoffkomponente einen feinteiligen Träger, wofür sich Silicium- und Aluminiumoxide, sowie Aluminiumsilicate der Bruttoformel SiO₂·aAl₂O₃, wobei a für einen Wert von 0,001 bis 2, insbesondere von 0,01 bis 0,5 steht, gut bewährt haben.

Die bevorzugt verwendeten Träger weisen ein Teilchendurchmesser von 0,1 bis 1000 »m, insbesondere von 10 bis 300 »m, ein Porenvolumen von 0,1 bis 10 cm³/g, insbesondere von 1,0 bis 5,0 cm³/g und eine spezifische Oberfläche von 10 bis 1000 m²/g, insbesondere von 100 bis 500 m²/g auf.

Weiter werden bei der Herstellung der titanhaltigen Feststoffkomponente u.a. Verbindungen des Magnesiums eingesetzt. Als solche kommen insbesondere Magnesiumhalogenide, Magnesiumalkyle und Magnesiumaryle, sowie Magnesiumalkoxy- und Magnesiumaryloxyverbindungen in Betracht, wobei bevorzugt Magnesiumdichlorid, Magnesiumdibromid und Magnesiumdi-(C₁-C₁₀-alkyl)-Verbindungen verwendet werden. Daneben kann die titanhaltige Feststoffkomponente noch Halogen, bevorzugt Chlor oder Brom, enthalten.

Ferner enthält die titanhaltige Feststoffkomponente noch Elektronendonorverbindungen, beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugt werden als Elektronendonorverbindungen innerhalb der titanhaltigen Feststoffkomponente Phthalsäurederivate der allgemeinen Formel I 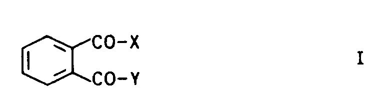
verwendet, wobei X und Y jeweils für ein Chloratom oder einen C₁- bis C₁₀-Alkoxyrest oder gemeinsam für Sauerstoff stehen. Besonders bevorzugte Elektronendonorverbindungen sind Phthalsäureester, wobei X und Y einen C₁-C₈-Alkoxyrest, beispielsweise einen Methoxy-, Ethoxy-, Propyloxy- oder einen Butyloxyrest bedeuten.

Weiter bevorzugte Elektronendonorverbindungen innerhalb der titanhaltigen Feststoffkomponente sind u.a. Diester von 3- oder 4-gliedrigen, gegebenenfalls substituierten Cycloalkyl-1,2-dicarbonsäuren, sowie Monoester von, gegebenenfalls substituierten Benzophenon-2-carbonsäuren. Als Hydroxyverbindungen werden bei diesen Estern die bei Veresterungsreaktionen üblichen Alkohole verwendet, u.a. C₁- bis C₁₅-Alkanole, C₅- bis C₇-Cycloalkanole, die ihrerseits C₁- bis C₁₀-Alkylgruppen tragen können, ferner C₆- bis C₁₀-Phenole.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200, der GB-A 2 111 066 und der US-A 4 857 613 beschrieben.

Bei der Herstellung der titanhaltigen Feststoffkomponente wird bevorzugt folgendes dreistufige Verfahren angewandt :
In der ersten Stufe versetzt man zunächst einen feinteiligen Träger, bevorzugt SiO₂·aAl₂O₃ - wobei a für eine Zahl im Bereich von 0,001 bis 2, insbesondere im Bereich von 0,01 bis 0,5 steht - mit einer Lösung der magnesiumhaltigen Verbindung in einem flüssigen Alkan, wonach man dieses Gemisch 0,5 bis 5 Stunden lang bei einer Temperatur zwischen 10 und 120°C rührt. Vorzugsweise setzt man pro Mol des Trägers 0,1 bis 1 mol der Magnesiumverbindung ein. Anschließend fügt man unter ständigem Rühren ein Halogen oder einen Halogenwasserstoff, insbesondere Chlor oder Chlorwasserstoff im wenigstens zweifachen, bevorzugt im wenigstens fünffachen molaren Überschuß, bezogen auf die magnesiumhaltige Verbindung, hinzu. Nach etwa 30 bis 120 Minuten trennt man den Feststoff von der flüssigen Phase ab.

In der zweiten Stufe bringt man das auf diese Weise erhaltene Produkt in ein flüssiges Alkan ein und fügt danach ein C₁- bis C₈-Alkanol, insbesondere Ethanol, ein Halogenid oder ein Alkoholat des drei- oder vierwertigen Titans, insbesondere Titantetrachlorid, sowie eine Elektronendonorverbindung hinzu. Dabei setzt man pro Mol Magnesium des aus der ersten Stufe erhaltenen Feststoffs 1 bis 5 mol, insbesondere 2 bis 4 mol, Alkanol, 2 bis 20 mol, insbesondere 4 bis 10 mol, des drei- oder vierwertigen Titans und 0,01 bis 1 mol, insbesondere 0,1 bis 1 mol, der Elektronendonorverbindung ein. Dieses Gemisch wird wenigstens eine Stunde lang bei einer Temperatur zwischen 10 und 150°C gerührt, der so erhaltene feste Stoff anschließend abfiltriert und mit einem flüssigen Alkan, bevorzugt mit Hexan oder Heptan, gewaschen.

In der dritten Stufe extrahiert man den aus der zweiten Stufe erhaltenen Feststoff einige Stunden lang bei Temperaturen zwischen 100 und 150°C mit überschüssigem Titantetrachlorid oder einer im überschuß vorliegenden Lösung von Titantetrachlorid in einem inerten Lösungsmittel, vorzugsweise einem Alkylbenzol, wobei das Lösungsmittel wenigstens 5 Gew.-% Titantetrachlorid enthält. Danach wäscht man das Produkt solange mit einem flüssigen Alkan, bis der Gehalt der Waschflüssigkeit an Titantetrachlorid weniger als 2 Gew.-% beträgt.

Die auf diese Weise erhältliche titanhaltige Feststoffkomponente wird mit Cokatalysatoren als Ziegler-Natta-Katalysatorsystem verwendet. Als Cokatalysatoren kommen dabei Aluminiumverbindungen und Elektronendonorverbindungen in Frage.

Als Cokatalysator geeignete Aluminiumverbindungen sind neben Trialkylaluminium auch solche Verbindungen, bei denen eine Alkylgruppe durch eine Alkoxygruppe oder durch ein Halogenatom, beispielsweise durch Chlor oder Brom, ersetzt ist. Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Bevorzugt verwendet man neben der Aluminiumverbindung noch als weiteren Cokatalysator Elektronendonorverbindungen wie beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugte Elektronendonorverbindungen sind dabei siliciumorganische Verbindungen der allgemeinen Formel II

R¹ₙSi(OR²)₄₋ₙ II.

wobei
R¹ gleich oder verschieden ist und eine C₁- bis C₂₀-Alkylgruppe, eine 5- bis 7-gliedrige Cycloalkylgruppe, die ihrerseits eine C₁- bis C₁₀-Alkylgruppe tragen kann, oder eine C₆- bis C₂₀-Aryl- oder Arylalkylgruppe bedeutet, R² gleich oder verschieden ist und eine C₁- bis C₂₀-Alkylgruppe bedeutet und n für die Zahlen 1, 2 oder 3 steht. Besonders bevorzugt werden dabei solche Verbindungen, in denen R¹ eine C₁- bis C₈-Alkylgruppe oder eine 5- bis 7-gliedrige Cycloalkylgruppe, sowie R² eine C₁- bis C₄-Alkylgruppe bedeutet und n für die Zahlen 1 oder 2 steht.

Unter diesen Verbindungen sind insbesondere Dimethoxydiisopropylsilan, Dimethoxyisobutylisopropylsilan, Dimethoxydiisobutylsilan, Dimethoxydicyclopentylsilan und Diethoxyisobutylisopropylsilan hervorzuheben.

Bevorzugt werden solche Katalysatorsysteme verwendet, bei denen das Atomverhältnis zwischen Aluminium aus der Aluminiumverbindung und Titan aus der titanhaltigen Feststoffkomponente 10:1 bis 800:1, insbesondere 20:1 bis 200:1, und das Molverhältnis zwischen der Aluminiumverbindung und der als Cokatalysator eingesetzten Elektronendonorverbindung 1:1 bis 100:1, insbesondere 2:1 bis 80:1 beträgt. Die einzelnen Katalysatorbestandteile können in beliebiger Reihenfolge einzeln oder als Gemisch zweier Komponenten in das Polymerisationssystem eingebracht werden.

Die zur Darstellung der erfindungsgemäßen Polymermischungen benötigten Propylencopolymerisate lassen sich in einem zweistufigen Verfahren herstellen, wobei in einer ersten Polymerisationsstufe Propylen polymerisiert wird und diesem Polymerisat anschließend in einer zweiten Polymerisationsstufe ein Gemisch aus Propylen und einem oder mehreren C₂-C₁₀-Alk-1-enen hinzupolymerisiert wird.

Die Polymerisation des Propylens wird in der ersten Polymerisationsstufe bei einem Druck von 20 bis 40 bar, einer Temperatur von 60 bis 90°C und einer mittleren Verweilzeit des Reaktionsgemisches von 1 bis 5 Stunden durchgeführt. Bevorzugt sind dabei Drücke von 20 bis 35 bar, Temperaturen von 65 bis 85°C und mittlere Verweilzeiten von 1,5 bis 4 Stunden. Man wählt die Reaktionsbedingungen üblicherweise so, daß in der ersten Polymerisationsstufe pro mmol der Aluminiumkomponente 0,05 bis 2 kg, bevorzugt 0,1 bis 1,5 kg, Polypropylen gebildet werden.

Dieses Polypropylen wird nach Beendigung der Reaktion mit dem Katalysator aus der ersten Polymerisationsstufe ausgetragen und in die zweiten Polymerisationsstufe eingeführt, wo diesem ein Gemisch aus Propylen und einem oder mehreren C₂-C₁₀-Alk-1-enen, insbesondere Ethylen oder But-1-en, hinzupolymerisiert wird. Der in der zweiten Polymerisationsstufe vorherrschende Druck liegt 7, bevorzugt 10 bar, unter dem der ersten Polymerisationsstufe und beträgt 5 bis 30, vorzugsweise 10 bis 25 bar. Die Temperatur liegt bei 30 bis 100, bevorzugt bei 35 bis 80°C und die mittlere Verweilzeit des Polymerisats beträgt 1 bis 5 Stunden, bevorzugt 1,5 bis 4 Stunden.

In der zweiten Polymerisationsstufe liegt das Verhältnis der Partialdrücke zwischen Propylen und dem oder den C₂-C₁₀-Alk-1-enen üblicherweise im Bereich von 0,5 : 1 bis 5 : 1, insbesondere im Bereich von 1 : 1 bis 4 : 1. Bevorzugt wird dabei das Gewichtsverhältnis zwischen den in der ersten und den in der zweiten Polymerisationsstufe umgesetzten Monomeren so bemessen, daß es in einem Bereich von 0,5 : 1 bis 20 : 1, insbesondere im Bereich von 0,9 : 1 bis 15 : 1, liegt.

Weiterhin besteht noch die Möglichkeit, dem Reaktionsgemisch in der zweiten Polymerisationsstufe ein C₁- bis C₈-Alkanol, insbesondere ein C₁-C₄-Alkanol, hinzuzufügen, welches die Aktivität des Ziegler-Natta-Katalysators beeinflußt. Dafür gut geeignete Alkanole sind u.a. Methanol, Ethanol, n-Propanol, n-Butanol und ganz besonders Isopropanol. Die Menge des hinzugefügten C₁- C₈-Alkanols wird dabei zweckmäßigerweise so bemessen, daß das Molverhältnis zwischen der Aluminiumverbindung und dem C₁-C₈-Alkanol 0,1:1 bis 10:1, insbesondere 0,2:1 bis 5:1 beträgt. Durch geeignete Wahl der Reaktionsparameter sollte ferner darauf geachtet werden, daß das Gewichtsverhältnis zwischen den in der ersten und den in der zweiten Polymerisationsstufe umgesetzten Monomeren 0,5 : 1 bis 20 : 1, insbesondere 0,9 : 1 bis 15 : 1, beträgt.

Weiterhin enthalten die erfindungsgemäßen Polymermischungen 41 bis 80 Gew.-%, vorzugsweise 41 bis 70 Gew.-% eines Polyethylens mit einer Dichte von 0,94 bis 0,98 g/cm³ und einem Schmelzflußindex von weniger als 15 g/10 min, bei 190°C und einem Gewicht von 2,16 kg (bestimmt nach DIN 53 735). Bevorzugt wird dabei ein Polyethylen mit einer Dichte von 0,945 bis 0,970 g/cm³ und einem Schmelzflußindex von weniger als 12 g/10 min, bei 190°C und einem Gewicht von 2,16 kg, verwendet. Der Schmelzflußindex entspricht dabei der Menge an Polymerisat, die innerhalb von 10 Minuten aus der nach DIN 53 735 genormten Prüfvorrichtung bei einer Temperatur von 190°C und unter einem Gewicht von 2,16 kg ausgepreßt wird.

Die Herstellung derartiger Polyethylene erfolgt üblicherweise durch Niederdruckpolymerisation mit metallhaltigen Katalysatoren, beispielsweise mit Hilfe von titan- und aluminiumhaltigen Ziegler-Katalysatoren, oder durch Phillips-Katalysatoren auf der Basis von chromhaltigen Verbindungen. Die Polymerisationsreaktion kann dabei mit den in der Technik üblichen Reaktoren, sowohl in der Gasphase, in Lösung oder auch in einer Aufschlämmung durchgeführt werden. Das Polyethylen kann bei der Herstellung der erfindungsgemäßen Polymermischung sowohl als Grieß als auch als Granulat verwendet werden.

Die Zumischung des Polyethylens zu dem Propylencopolymerisat erfolgt in den in der Kunststoffverarbeitung üblicherweise zur Vereinigung von Stoffen eingesetzten Apparaturen beispielsweise in Trommelmischern, in Mühlen, in Schnecken- oder Scheibenextrudern, in Walzwerken oder Knetern. Der Mischungsvorgang erfolgt beispielsweise in Extrudern bei Drücken von 1 bis 50 bar, Temperaturen von 20 bis 300 °C und mittleren Verweilzeiten von 0,1 bis 5 Minuten. Bevorzugt sind dabei Drücke von 10 bis 40 bar, Temperaturen von 100 bis 280°C und mittlere Verweilzeiten von 0,5 bis 3 Minuten.

Nach einer weiteren Ausführungsform des zu den erfindungsgemäßen Polymermischungen führenden Herstellungsverfahrens ist auch möglich, das Polyethylen in den zur Herstellung des Propylencopolymerisats verwendeten Reaktoren direkt einzuführen, so daß die Propylenpolymerisation und der Mischungsvorgang gleichzeitig ablaufen können. In diesem Fall ist dafür Sorge zu tragen, daß die bei der Propylenpolymerisation eingesetzten Reaktoren mit geeigneten Rührvorrichtungen versehen sind.

Die erfindungsgemäßen Polymermischungen zeichnen sich u.a. durch eine hohe Schlagzähigkeit, eine hohe Steifigkeit und eine niedrige Neigung zum Weißbruch aus. Sie sind ohne großen verfahrenstechnischen Aufwand herstellbar und eignen sich insbesondere zur Herstellung von Folien, Rohren, Belägen, Fasern, Hohlkörpern, Spritzgußartikeln und von Formteilen für den Fahrzeugbau.

### Beispiele

Alle Beispiele 1a-1d, 2a-2d und 3a-3f wurden in einem Zweischneckenextruder der Firma Wernerer & Pfleiderer ("ZSK 30" bzw. "ZSK 40") bei einem Druck von 30 bar, einer Temperatur von 220°C und einer mittleren Verweilzeit von 1 Minute durchgeführt. Die dabei verwendeten Propylencopolymerisate und Polyethylene wurden als Grieß oder als Granulat in den Zweischneckenextruder eingeführt.

### Beispiel 1a (Vergleichbeispiel)

70 Gew.-Teile eines Propylencopolymerisats mit 62 Gew.-% Propylenhomopolymerisat, 38 Gew.-% Propylen-Ethylencopolymerisat [bestimmt durch Extraktionsfraktionierung nach W. Holtrup, Makromol. Chem. 178, 2335 (1977)], einem Ethylengehalt von 20 Gew.-%, bezogen auf das Propylencopolymerisat, [bestimmt durch Infrarotspektroskopie] und einem Schmelzflußindex von 1,9 g/10 min. [bei 230°C und 2,16 kg, nach DIN 53 735] wurden im Zweischneckenextruder mit 30 Gew.-Teilen eines Polyethylens mit einem Dichtebereich von 0,948-0,952 g/cm³ und einem Schmelzflußindex von 0,2 g/10 min. [bei 190°C und 2,16 kg, nach DIN 53 735] vermischt.

Von der dabei erhaltenen Polymermischung wurden der Schmelzflußindex, die Steifigkeit (G-Modul), die Schlagzähigkeit, die Kerbschlagzähigkeit und der Weißbruch bestimmt. Die genauen Ergebnisse der Messungen können der nachstehenden Tabelle 1 entnommen werden.

### Bestimmung des Weißbruchs:

Der Weißbruch wurde mit Hilfe einer Fallbolzenapparatur nach DIN 53 443 Teil 1 ermittelt, wobei ein Fallbolzen mit einer Masse von 250 g, einem Stoßkörper mit 5 mm Durchmesser und einem Kalottenradius von 25 mm verwendet wurde. Die Fallhöhe betrug 50 cm.

Als Probekörper wurde eine spritzgegossene Rundscheibe mit einem Durchmesser von 60 mm und einer Dicke von 2 mm verwendet. Der Probekörper wurde bei einer Massetemperatur von 250°C und einer Werkzeugoberflächentemperatur von 30°C spritzgegossen.

Die Prüfung erfolgte bei einer Temperatur von 23°C, wobei jeder Probekörper nur jeweils einem Stoßversuch unterworfen wurde. Dabei wurde zunächst der Probekörper auf einen Auflagering gelegt, ohne daß dieser eingespannt wurde, und anschließend wurde der Fallbolzen ausgelöst. Zur Mittelwertbildung wurden jeweils 5 Probekörper geprüft.

Der Durchmesser der sichtbaren Weißbruchmarkierung ist in mm angegeben und wurde dadurch ermittelt, daß man diesen auf der dem Stoß abgewandten Seite der Rundscheibe in Fließrichtung und senkrecht dazu maß und aus beiden Werten den Mittelwert bestimmte.

### Beispiele 1b-1d

Unter den Bedingungen von Beispiel 1a wurde das dabei verwendete Propylencopolymerisat mit Polyethylen vermischt. Die jeweiligen Anteile der dabei eingesetzten Polymerisate und die Dichten des jeweils verwendeten Polyethylens können zusammen mit den Eigenschaften der bei den Versuchen erhaltenen Polymermischungen der nachstehenden Tabelle 1 entnommen werden. Der Schmelzflußindex des verwendeten Polyethylens betrug jeweils 0,2 g/10 min [bei 190°C und 2,16 kg, nach DIN 53 735].

**Tabelle 1**

| | Verwendetes Propylencopolymerisat | Beispiele | | | |
|---|---|---|---|---|---|
| | | 1a | 1b | 1c | 1d |
| Gewichtsteile Propylencopolymerisat | | 70 | 57 | 50 | 34 |
| Gewichtsteile Polyethylen | | 30 | 43 | 50 | 66 |
| Dichte des Polyethylens [g/cm³] | | 0,948 | 0,948 | 0,948 | 0,948 |
| | | - | - | - | - |
| | | 0,952 | 0,952 | 0,952 | 0,952 |
| Schmelzfluß- ^{a)} index der erhaltenen Polymermischung [g/10 min] | | 1,0 | 0,8 | 0,5 | 0,4 |
| Steifigkeit ^{b)} (G-Modul) [N/mm²] | 270 | 275 | 360 | 370 | 410 |
| Schlagzähigkeit ^{c)} [kJ/m²] | ohne Bruch | ohne Bruch | ohne Bruch | ohne Bruch | ohne Bruch |
| Kerbschlagzähigkeit ^{d)} [kJ/m²] | 43* | 43* | 43* | 43* | 40* |
| Weißbruch ^{e)} [mm] | 6,6 | 0 | 0 | 0 | 0 |

| | | | | | |
|---|---|---|---|---|---|
| ^{a)} bei 230°C und 2,16 kg, nach DIN 53 735 | | | | | |
| ^{b)} nach DIN 53 445 | | | | | |
| ^{c)} nach DIN 53 453, bei -20°C | | | | | |
| ^{d)} nach DIN 53 453, bei -20°C | | | | | |
| ^{e)} bei 23°C, Beschreibung auf Seite 9 | | | | | |
| *) Teilbruch | | | | | |

### Beispiel 2a (Vergleichbeispiel)

67 Gew.-Teile eines Propylencopolymerisats mit 47 Gew.-% Propylenhomopolymerisat, 53 Gew.-% Propylen-Ethylencopolymerisat [bestimmt durch Extraktionsfraktionierung nach W. Holtrup, Makromol. Chem. 178, 2335 (1977)], einem Ethylengehalt von 27 Gew.-%, bezogen auf das Propylencopolymerisat, (bestimmt durch Infrarotspektroskopie] und einem Schmelzflußindex von 1,2 g/10 min [bei 230°C und 2,16 kg, nach DIN 53 735] wurden im Zweischneckenextruder mit 33 Gew.-Teilen eines Polyethylens mit einem Dichtebereich von 0,948-0,952 g/cm³ und einem Schmelzflußindex von 0,2 g/10 min. [bei 190°C und 2,16 kg, nach DIN 53 735] vermischt.

Von der dabei erhaltenen Polymermischung wurde der Schmelzflußindex, die Steifigkeit (G-Modul), die Schlagzähigkeit, die Kerbschlagzähigkeit und der Weißbruch bestimmt. Die genauen Ergebnisse der Messungen können der nachstehenden Tabelle 2 entnommen werden.

### Beispiele 2b-2d

Unter den Bedingungen von Beispiel 2a wurde das dabei verwendete Propylencopolymerisat mit Polyethylen vermischt. Die jeweiligen Anteile der dabei eingesetzten Polymerisate und die Dichten des jeweils verwendeten Polyethylens können zusammen mit den Eigenschaften der bei den Versuchen erhaltenen Polymermischungen der nachstehenden Tabelle 2 entnommen werden. Der Schmelzflußindex des verwendeten Polyethylens betrug jeweils 0,2 g/10 min [bei 190°C und 2,16 kg, nach DIN 53 735].

**Tabelle 2**

| | Verwendetes Propylencopolymerisat | Beispiele | | | |
|---|---|---|---|---|---|
| | | 2a (Vergleichbeispiel) | 2b (Vergleichbeispiel) | 2c | 2d |
| Gewichtsteile Propylencopolymerisat | | 67 | 62 | 59 | 55 |
| Gewichtsteile Polyethylen | | 33 | 38 | 41 | 45 |
| Dichte des Polyethylens [g/cm³] | | 0,948 | 0,948 | 0,948 | 0,948 |
| | | - | - | - | - |
| | | 0,952 | 0,952 | 0,952 | 0,952 |
| Schmelzfluß- ^{a)} index der erhaltenen Polymermischung [g/10 min] | | 0,7 | 0,7 | 0,6 | 0,6 |
| Steifigkeit ^{b)} (G-Modul) [N/mm²] | 185 | 260 | 270 | 275 | 295 |
| Schlagzähigkeit ^{c)} [kJ/m²] | ohne Bruch | ohne Bruch | ohne Bruch | ohne Bruch | ohne Bruch |
| Kerbschlagzähigkeit ^{d)} [kJ/m²] | 100%* | 100%* | 100%* | 100%* | 100%* |
| Weißbruch ^{e)} [mm] | 0 | 0 | 0 | 0 | 0 |

| | | | | | |
|---|---|---|---|---|---|
| ^{a)} bei 230°C und 2,16 kg, nach DIN 53 735 | | | | | |
| ^{b)} nach DIN 53 445 | | | | | |
| ^{c)} nach DIN 53 453, bei -20°C | | | | | |
| ^{d)} nach DIN 53 453, bei -20°C | | | | | |
| ^{e)} bei 23°C, Beschreibung auf Seite 9 | | | | | |
| *) angebrochen | | | | | |

### Beispiel 3a

70 Gew.-Teile eines Propylencopolymerisats mit 62 Gew.-% Propylenhomopolymerisat, 38 Gew.-% Propylen-Ethylencopolymerisat, einem Ethylengehalt von 20 Gew.-%, bezogen auf das Propylencopolymerisat, und einem Schmelzflußindex von 9,6 g/10 min [bei 230°C und 2,16 kg, nach DIN 53 735] wurden im Zweischneckenextruder mit 30 Gew.-Teilen eines Polyethylens mit einem Dichtebereich von 0,948-0,952 g/cm³ und einem Schmelzflußindex von 0,2 g/10 min. [bei 190°C und 2,16 kg, nach DIN 53 735] vermischt.

Von der dabei erhaltenen Polymermischung wurde der Schmelzflußindex, die Steifigkeit (G-Modul), die Schlagzähigkeit, die Kerbschlagzähigkeit und der Weißbruch bestimmt. Die genauen Ergebnisse der Messungen können der nachstehenden Tabelle 3 entnommen werden.

### Beispiele 3b-3f

Unter den Bedingungen von Beispiel 3a wurde das dabei verwendete Propylencopolymerisat mit Polyethylen vermischt. Die jeweiligen Anteile der dabei eingesetzten Polymerisate und die Dichten der jeweils verwendeten Polyethylene können zusammen mit den Eigenschaften der bei den Versuchen erhaltenen Polymermischungen der nachstehenden Tabelle 3 entnommen werden. Der Schmelzflußindex des verwendeten Polyethylens betrug in den Beispielen 3b und 3c jeweils 0,2 g/10 min und in den Beispielen 3d-3f jeweils 8,0/10 min [bei 190°C und 2,16 kg, nach DIN 53 735].

**Tabelle 3**

| | Verwendetes Propylencopolymerisat | Beispiele | | | | | |
|---|---|---|---|---|---|---|---|
| | | 3a (Vergleichbeispiel) | 3b | 3c | 3d (Vergleichbeispiel) | 3e | 3f |
| Gewichtsteile Propylencopolymerisat | | 70 | 55 | 40 | 70 | 55 | 40 |
| Gewichtsteile Polyethylen | | 30 | 45 | 60 | 30 | 45 | 60 |
| Dichte des Polyethylens [g/cm³] | | 0,948 | 0,948 | 0,948 | 0,962 | 0,962 | 0,962 |
| | | - | - | - | - | - | - |
| | | 0,952 | 0,952 | 0,952 | 0,966 | 0,966 | 0,966 |
| Schmelzfluß- ^{a)} index der erhaltenen Polymermischung [g/10 min] | | 4,1 | 1,8 | 1,1 | 9,6 | 9,3 | 9,7 |
| Steifigkeit ^{b)} (G-Modul) [N/mm²] | 260 | 270 | 335 | 385 | 280 | 350 | 400 |
| Schlagzähigkeit ^{c)} [kJ/m²] | ohne Bruch | ohne Bruch | ohne Bruch | ohne Bruch | ohne Bruch | ohne Bruch | ohne Bruch |
| Kerbschlagzähigkeit ^{d)} [kJ/m²] | 100%* | 100%* | 100%* | 100%* | 100%* | 100%* | 11,2 |
| Weißbruch ^{e)} [mm] | 0 | 0 | 0 | 0 | 0 | 0 | 0 |

| | | | | | | | |
|---|---|---|---|---|---|---|---|
| ^{a)} bei 230°C und 2,16 kg, nach DIN 53 735 | | | | | | | |
| ^{b)} nach DIN 53 445 | | | | | | | |
| ^{c)} nach DIN 53 453, bei -20°C | | | | | | | |
| ^{d)} nach DIN 53 453, bei -20°C | | | | | | | |
| ^{e)} bei 23°C, Beschreibung auf Seite 9 | | | | | | | |
| *) angebrochen | | | | | | | |

Aus den Beispielen wird ersichtlich, daß die erfindungsgemäßen Polymermischungen bei gleichbleibend hoher Schlagzähigkeit eine hohe Steifigkeit und eine teilweise erheblich verringerte Neigung zum Weißbruch aufweisen.

## Patentansprüche (Patentansprüche für folgende(n) Vertragsstaat(en): AT, BE, DE, FR, GB, IT, NL)

1. Polymermischungen, enthaltend
a) 20 bis 59 Gew.-% eines Propylencopolymerisats, welches seinerseits aus 20 bis 65 Gew.-% eines Propylenhomopolymerisats und 35 bis 80 Gew.-% eines statistischen Propylencopolymerisats mit einpolymerisierten C₂-C₁₀-Alk-1-enen besteht, und
b) 41 bis 80 Gew.-% eines Polyethylens mit einer Dichte von 0,94 bis 0,98 g/cm³ und einem Schmelzflußindex von weniger als 15 g/10 min, bei 190°C und einem Gewicht von 2,16 kg.

2. Polymermischungen nach Anspruch 1, welche 30 bis 59 Gew.-% Propylencopolymerisat und 41 bis 70 Gew.-% Polyethylen aufweisen.

3. Polymermischungen nach den Ansprüchen 1 oder 2, welche ein Propylencopolymerisat enthalten, das aus 35 bis 65 Gew.-% Propylenhomopolymerisat und 35 bis 65 Gew.-% statistischem Propylencopolymerisat besteht.

4. Polymermischungen nach den Ansprüchen 1 bis 3, welche ein Polyethylen mit einer Dichte von 0,945 bis 0,970 g/cm³ enthalten.

5. Polymermischungen nach den Ansprüchen 1 bis 4, welche ein Polyethylen mit einem Schmelzflußindex von weniger als 12 g/10 min., bei 190°C und einem Gewicht von 2,16 kg, enthalten.

6. Verfahren zur Herstellung von Polymermischungen aus Propylencopolymerisaten und Polyethylenen, dadurch gekennzeichnet, daß man hierzu Propylencopolymerisate und Polyethylene gemäß einem der Ansprüche 1 bis 5 verwendet.

7. Folien und Formkörper aus den Polymermischungen nach den Ansprüchen 1 bis 5.

## Patentansprüche (Patentansprüche für folgende(n) Vertragsstaat(en): ES)

1. Verfahren zur Herstellung von Polymermischungen, dadurch gekennzeichnet, daß man hierzu
a) 20 bis 59 Gew.-% eines Propylencopolymerisats, welches seinerseits aus 20 bis 65 Gew.-% eines Propylenhomopolymerisats und 35 bis 80 Gew.-% eines statistischen Propylencopolymerisats mit einpolymerisierten C₂-C₁₀-Alk-1-enen besteht, und
b) 41 bis 80 Gew.-% eines Polyethylens mit einer Dichte von 0,94 bis 0,98 g/cm³ und einem Schmelzflußindex von weniger als 15 g/10 min, bei 190°C und einem Gewicht von 2,16 kg, verwendet.

2. Verfahren nach Anspruch 1, dadurch gekennzeichnet, daß man 30 bis 59 Gew.-% Propylencopolymerisat und 41 bis 70 Gew.-% Polyethylen verwendet.

3. Verfahren nach den Ansprüchen 1 oder 2, dadurch gekennzeichnet, daß man ein Propylencopolymerisat verwendet, das aus 35 bis 65 Gew.-% Propylenhomopolymerisat und 35 bis 65 Gew.-% statistischem Propylencopolymerisat besteht.

4. Verfahren nach den Ansprüchen 1 bis 3, dadurch gekennzeichnet, daß man ein Polyethylen mit einer Dichte von 0,945 bis 0,970 g/cm³ verwendet.

5. Verfahren nach den Ansprüchen 1 bis 4, dadurch gekennzeichnet, daß man ein Polyethylen mit einem Schmelzflußindex von weniger als 12 g/10 min., bei 190°C und einem Gewicht von 2,16 kg, verwendet.

6. Verfahren zur Herstellung von Folien und Formkörpern, dadurch gekennzeichnet, daß man nach den Ansprüchen 1 bis 5 hergestellte Polymermischungen verwendet.

## Claims (Claims for the following Contracting State(s): AT, BE, DE, FR, GB, IT, NL)

1. A polymer blend containing
a) from 20 to 59% by weight of a propylene copolymer which in turn consists of from 20 to 65% by weight of a propylene homopolymer and from 35 to 80% by weight of a random propylene copolymer containing polymerized C₂-C₁₀-alk-1-enes and
b) from 41 to 80% by weight of a polyethylene having a density of from 0.94 to 0.98 g/cm³ and a melt flow index of less than 15 g/10 min at 190°C under a weight of 2.16 kg.

2. A polymer blend as claimed in claim 1, which contains from 30 to 59% by weight of a propylene copolymer and from 41 to 70% by weight of polyethylene.

3. A polymer blend as claimed in claim 1 or 2, which contains a propylene copolymer which consists of from 35 to 65% by weight of propylene homopolymer and from 35 to 65% by weight of a random propylene copolymer.

4. A polymer blend as claimed in claim 1 or 2 or 3, which contains a polyethylene having a density of from 0.945 to 0.970 g/cm³.

5. A polymer blend as claimed in claim 1 or 2 or 3 or 4, which contains a polyethylene having a melt flow index of less than 12 g/10 min at 190°C and a weight of 2.16 kg.

6. A process for the preparation of a polymer blend of a propylene copolymer and polyethylene, wherein a propylene copolymer and a polyethylene as claimed in claim 1 or 2 or 3 or 4 or 5 are used for this purpose.

7. A film or molding of a polymer blend as claimed in claim 1 or 2 or 3 or 4 or 5.

## Claims (Claims for the following Contracting State(s): ES)

1. A process for the preparation of a polymer blend, which comprises using
a) from 20 to 59% by weight of a propylene copolymer which in turn consists of from 20 to 65% by weight of a propylene homopolymer and from 35 to 80% by weight of a random propylene copolymer containing polymerized C₂-C₁₀-alk-1-enes and
b) from 41 to 80% by weight of a polyethylene having a density of from 0.94 to 0.98 g/cm³ and a melt flow index of less than 15 g/10 min at 190°C under a weight of 2.16 kg.

2. A process as claimed in claim 1, wherein from 30 to 59% by weight of a propylene copolymer and from 41 to 70% by weight of polyethylene are used.

3. A process as claimed in claim 1 or 2, wherein a propylene copolymer which consists of from 35 to 65% by weight of propylene homopolymer and from 35 to 65% by weight of a random propylene copolymer is used.

4. A process as claimed in claim 1 or 2 or 3, wherein a polyethylene having a density of from 0.945 to 0.970 g/cm³ is used.

5. A process as claimed in claim 1 or 2 or 3 or 4, wherein a polyethylene having a melt flow index of less than 12 g/10 min at 190°C and a weight of 2.16 kg is used.

6. A process for the production of a film or molding, wherein a polymer blend prepared as claimed in claim 1 or 2 or 3 or 4 or 5 is used.

## Revendications (Revendications pour l'(les) Etat(s) contractant(s) suivant(s): AT, BE, DE, FR, GB, IT, NL)

1. Mélanges de polymères, qui contiennent
a) 20 à 59% en poids d'un copolymère du propylène, qui est constitué, de son côté, de 20 à 65% en poids d'un homopolymère du propylène et de 35 à 80% en poids d'un copolymère du propylène stochastique avec des alc-1-ènes en C₂ à C₁₀, incorporés par polymérisation et
b) 41 à 80% en poids d'un polyéthylène d'une masse spécifique de 0,94 à 0,98 g/cm³ et d'un indice d'écoulement à l'état fondu inférieur à 15 g/10 min., à 190°C et d'un poids de 2,16 kg.

2. Mélanges de polymères suivant la revendication 1, caractérisés en ce qu'ils comportent 30 à 59% en poids de copolymère du propylène et 41 à 70% en poids de polyéthylène.

3. Mélanges de polymères suivant l'une quelconque des revendications 1 et 2, caractérisés en ce qu'ils contiennent un copolymère du propylène qui est constitué de 35 à 65% en poids d'un homopolymère du propylène et de 35 à 65% en poids d'un copolymère du propylène stochastique.

4. Mélanges de polymères suivant l'une quelconque des revendications 1 à 3, caractérisés en ce qu'ils contiennent un polyéthylène d'une masse spécifique de 0,945 à 0,970 g/cm³.

5. Mélanges de polymères suivant l'une quelconque des revendications 1 à 4, caractérisés en ce qu'ils contiennent un polyéthylène qui possède un indice d'écoulement à l'état fondu inférieur à 12 g/10 min., à 190°C et d'un poids de 2,16 kg.

6. Procédé de fabrication de mélanges de polymères constitués de copolymères du propylène et de polyéthylènes, caractérisé en ce que l'on utilise à cette fin des copolymères du propylène et des polyéthylènes suivant l'une quelconque des revendications 1 à 5.

7. Feuilles et articles moulés obtenus à partir des mélanges de polymères suivant l'une quelconque des revendications 1 à 5.

## Revendications (Revendications pour l'(les) Etat(s) contractant(s) suivant(s): ES)

1. Procédé de préparation de mélanges de polymères, caractérisé en ce que, à cette fin, on utilise
a) 20 à 59% en poids d'un copolymère du propylène, qui est constitué, de son côté, de 20 à 65% en poids d'un homopolymère du propylène et de 35 à 80% en poids d'un copolymère du propylène stochastique avec des alc-1-ènes en C₂ à C₁₀, incorporés par polymérisation et
b) 41 à 80% en poids d'un polyéthylène d'une masse spécifique de 0,94 à 0,98 g/cm³ et d'un indice d'écoulement à l'état fondu inférieur à 15 g/10 min., à 190°C et d'un poids de 2,16 kg.

2. Procédé suivant la revendication 1, caractérisé en ce que l'on utilise 30 à 59% en poids de copolymère du propylène et 41 à 70% en poids de polyéthylène.

3. Procédé suivant l'une quelconque des revendications 1 et 2, caractérisé en ce que l'on utilise un copolymère du propylène qui est constitué de 35 à 65% en poids d'homopolymère du propylène et de 35 à 65% en poids de copolymère du propylène stochastique.

4. Procédé suivant l'une quelconque des revendications 1 à 3, caractérisé en ce que l'on utilise un polyéthylène d'une masse spécifique de 0,945 à 0,970 g/cm³.

5. Procédé suivant l'une quelconque des revendications 1 à 4, caractérisé en ce que l'on utilise un polyéthylène d'un indice d'écoulement à l'état fondu inférieur à 12 g/10 min., à 190°C et d'un poids de 2,16 kg.

6. Procédé de fabrication de feuilles et d'articles moulés, caractérisé en ce que l'on utilise des mélanges de polymères fabriqués selon une quelconque des revendications 1 à 5.
